# FASCICULE DE BREVET EUROPEEN

(11) **EP 3 317 882 B1**
(45) Date de publication et mention de la délivrance du brevet: **10.04.2019**
(21) Numéro de dépôt: 16734369.8
(22) Date de dépôt: 01.07.2016
(51) Int. Cl.: G21C 1/09, G21C 1/32, G21C 13/02, G21C 17/116, G21C 13/028

(54) **RÉACTEUR NUCLÉAIRE AVEC ÉLÉMÉNTS CHAUFFANTS ENTIÈREMENT LOGÉS DANS UN PRESSURISEUR INTÉGRÉ, PROCÉDÉ D'EXPLOITATION CORRESPONDANT**
KERNREAKTOR MIT HEIZELEMENTEN, DIE IN IHRER GESAMTHEIT IN EINEM INTEGRIERTEN DRUCKHALTER UNTERGEBRACHT SIND, UND ZUGEHÖRIGES VERFAHREN ZUR VERWENDUNG
NUCLEAR REACTOR WITH HEATING ELEMENTS HOUSED IN THEIR ENTIRETY IN AN INTEGRATED PRESSURISER AND CORRESPONDING METHOD OF USE

(30) Priorité: 01.07.2015 FR 1556218
(43) Date de publication de la demande: 09.05.2018
(73) Titulaire: Société Technique pour l'Energie Atomique, 91190 Villiers Le Bacle (FR)
(72) Inventeur: BRUN, Michel, 13109 Simiane-Collongue (FR)
(74) Mandataire: Lavoix
(86) Numéro de dépôt international: PCT/EP2016/065506
(87) Numéro de publication internationale: WO 2017/001663

(56) Documents cités:
- EP-A1- 0 271 890
- WO-A1-2013/158697
- WO-A2-2013/158538
- FR-A1- 2 895 206
- US-A1- 2013 287 157
- US-A1- 2013 308 740

## Description

L'invention concerne en général les réacteurs nucléaires à pressuriseur intégré.

Plus précisément, l'invention concerne selon un premier aspect un réacteur nucléaire à pressuriseur intégré, du type :
- une cuve ayant un axe central ;
- un pressuriseur logé dans la cuve, le pressuriseur ayant une zone inférieure remplie par un liquide primaire et une zone supérieure remplie par une vapeur ;
- une pluralité d'assemblages de combustible nucléaire, formant un coeur disposé dans la cuve ;
- une pluralité d'éléments chauffants prévus pour chauffer le liquide primaire remplissant la zone inférieure du pressuriseur ;
- au moins une source de courant ;
- des conducteurs électriques raccordant chaque élément chauffant à la source de courant électrique ;
- une pluralité de pénétrations électriques, définissant des passages étanches à travers la cuve.

Un tel réacteur est connu par exemple de US2013 /0308740. Ce réacteur comporte de multiples cannes chauffantes, agencées radialement. Ces cannes chauffantes sont limitées en longueur par le rayon de la cuve, et en diamètre pour ne pas augmenter la taille des orifices de la cuve dans lesquelles elles sont engagées. Ceci conduit à des densités de puissance importantes et à des épaisseurs d'isolants minéraux autour de chaque résistance chauffante en limite technologique. En conséquence, les taux de défaillance des cannes chauffantes sont significatifs, et entraînent des opérations de maintenance pénalisantes pour l'exploitation du réacteur. Un autre réacteur nucléaire à pressuriseur intégré est connu du document US2013 /0287157.

Dans ce contexte, l'invention vise à proposer un réacteur nucléaire dont la maintenance soit facilitée.

A cet effet, l'invention porte sur un réacteur nucléaire à pressuriseur intégré du type précité, caractérisé en ce que les éléments chauffants sont entièrement logés dans le pressuriseur, chaque élément chauffant étant raccordé à un des conducteurs par l'intermédiaire d'un point de connexion électrique placé à l'intérieur du pressuriseur, et en ce que seuls les conducteurs électriques sortent de la cuve par les pénétrations électriques.

Ainsi, les éléments chauffants ne sont pas reçus dans des orifices traversant la cuve. Les traversées ne reçoivent que les conducteurs électriques, et non les éléments chauffants.

Du fait de l'agencement des éléments chauffants à l'intérieur du pressuriseur, la forme et la section de ces éléments chauffants peuvent être choisies de manière plus libre que quand ces éléments chauffants sont reçus dans des orifices de la cuve. Ceci permet en particulier d'allonger les éléments chauffants et de réduire ainsi la densité de puissance. Par ailleurs, la section des éléments chauffants peut être agrandie, et en conséquence l'épaisseur d'isolant électrique peut être augmentée.

La fiabilité des éléments chauffants est ainsi accrue.

Le réacteur nucléaire peut également présenter une ou plusieurs des caractéristiques ci-dessous, considérées individuellement ou selon toutes les combinaisons techniquement possibles :
- les éléments chauffants s'étendent entièrement dans la zone inférieure du pressuriseur ;
- chaque élément chauffant s'étend dans un plan sensiblement perpendiculaire à l'axe central ;
- les éléments chauffants s'étendent dans au moins un plan sensiblement perpendiculaire à l'axe central ;
- chaque élément chauffant s'étend selon un arc de cercle centré sur l'axe central ;
- la cuve comprend un dôme, le réacteur nucléaire comprend une plaque d'isolation thermique fixée au dôme, le dôme et la plaque d'isolation thermique délimitant entre eux le pressuriseur, les éléments chauffants étant fixés à la plaque d'isolation thermique ;
- la cuve comprend un dôme, les pénétrations électriques traversant une partie du dôme délimitant la zone supérieure du pressuriseur ;
- la cuve comprend une partie inférieure fixe et une partie supérieure fixée de manière démontable à la partie inférieure, la partie supérieure comprenant au moins le dôme ;
- le réacteur nucléaire comprend entre 3 et 15 éléments chauffants ;
- chaque élément chauffant comporte une enveloppe externe, un corps chauffant logé dans l'enveloppe externe, et au moins une ailette en saillie sur une surface externe de l'enveloppe externe ;
- les éléments chauffants ne sont pas agencés dans un orifice de la cuve ; et
- chaque élément chauffant comporte une enveloppe externe, un corps chauffant logé dans l'enveloppe externe, l'enveloppe externe étant dans son intégralité située à l'intérieure du pressuriseur.

Selon un second aspect, l'invention porte sur un procédé d'exploitation d'un réacteur nucléaire ayant les caractéristiques ci-dessus :
- produire de l'énergie avec le réacteur nucléaire ;
- arrêter la production d'énergie ;
- ouvrir la cuve du réacteur ;
- effectuer des opérations de maintenance sur des éléments du pressuriseur dont au moins un des éléments chauffants ;
- effectuer en parallèle des opérations de maintenance programmées sur d'autres composants du réacteur, en particulier des opérations de remplacement d'assemblages de combustible ;
- fermer la cuve du réacteur et produire de nouveau de l'énergie avec le réacteur nucléaire.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique simplifiée d'un réacteur nucléaire à pressuriseur intégré conforme à l'invention ;
- la figure 2 est une vue en perspective du pressuriseur du réacteur nucléaire de la figure 1 ;
- la figure 3 est une vue en section partielle d'un élément chauffant du pressuriseur de la figure 2 ; et
- la figure 4 est un diagramme d'étape du procédé d'exploitation du réacteur nucléaire de la figure 1.

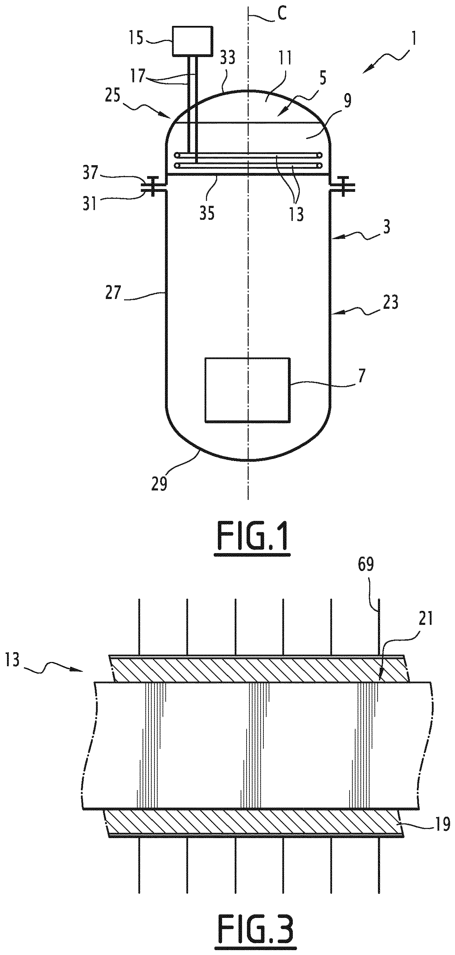

Le réacteur nucléaire 1 représenté sur la figure 1 est un réacteur à eau pressurisée (REP ou PWR) et pressuriseur intégré. Le réacteur nucléaire 1 est du type connu sous le sigle SMR (small and modular reactor, ou réacteur petit et modulaire). De tels réacteurs équipent par exemple de petites installations nucléaires d'une puissance de quelques centaines de MWe. Le réacteur nucléaire 1 comporte :
- une cuve 3,
- un pressuriseur 5 logé dans la cuve 3, et
- une pluralité d'assemblages de combustibles nucléaires, formant un coeur 7 disposé dans la cuve 3.

Comme visible sur la figure 1, la cuve 3 présente un axe central C sensiblement vertical. Les termes « supérieur » et « inférieur » seront entendus dans la présente description relativement à la direction verticale.

La cuve 3 est sensiblement de révolution autour de l'axe central C.

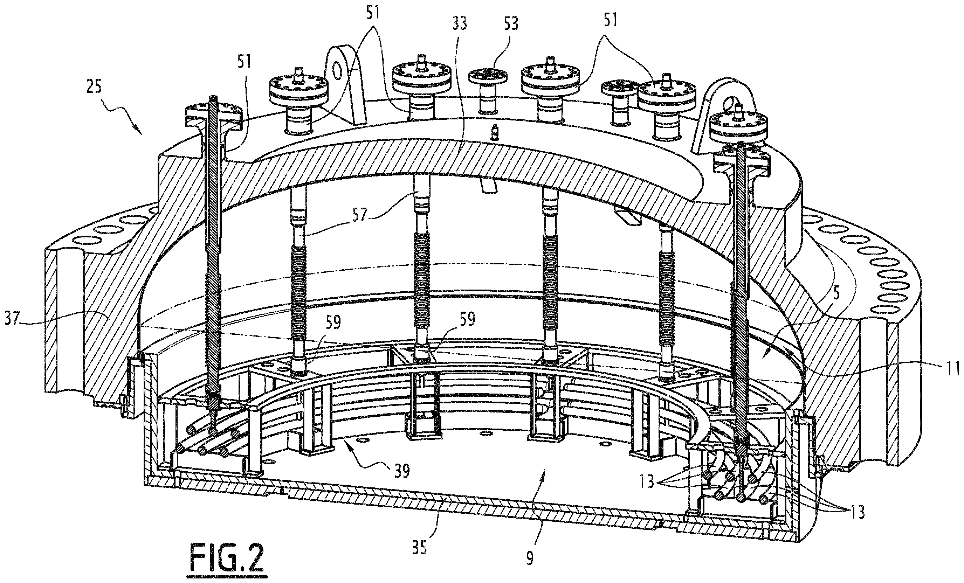

Comme indiqué plus haut, le pressuriseur 5 est prévu pour contrôler la pression de liquide primaire dans le circuit primaire. Dans le réacteur 1 représenté sur la figure 2, de type SMR, le circuit primaire est entièrement logé à l'intérieur de la cuve. Dans d'autres types de réacteurs, certains éléments du circuit primaire sont situés à l'extérieur de la cuve et sont raccordés à cette cuve par des conduits de circulation.

Le pressuriseur 5 est dit « intégré » à la cuve, au sens où il est formé par un volume supérieur de la cuve 3. Il comporte une zone inférieure 9 remplie par le liquide primaire, et une zone supérieure 11 remplie par une vapeur. Les zones inférieure et supérieure 9 et 11 communiquent, et ne forment qu'un seul volume continu. La vapeur remplissant la zone supérieure 11 est constamment en équilibre thermohydraulique avec le liquide primaire remplissant la zone inférieure 9.

Le réacteur nucléaire comprend encore une pluralité d'éléments chauffants 13, prévus pour chauffer le liquide primaire occupant la zone inférieure du pressuriseur.

Les éléments chauffants 13 sont de type résistif. Ainsi, le réacteur nucléaire comporte au moins une source de courant 15, et des conducteurs électriques 17 raccordant chaque élément chauffant 13 à la source de courant 15.

Selon l'invention, les éléments chauffants 13 sont entièrement logés dans le pressuriseur 5.

Comme visible sur les figures 2 et 3, chaque élément chauffant 13 comporte une enveloppe 19, un corps chauffant 21 logé dans l'enveloppe, chaque élément chauffant 13 et donc chaque corps chauffant étant raccordé électriquement à un des conducteurs 17. On entend par « entièrement logé » dans le pressuriseur le fait que l'enveloppe 19 dans son intégralité est située à l'intérieur du pressuriseur 5. Chaque élément chauffant 13, au travers du corps chauffant 21 et de l'enveloppe 19, est raccordé à un des conducteurs 17 par l'intermédiaire d'un point de connexion électrique placé à l'intérieur du pressuriseur. Le point de connexion étant placé à l'intérieur du pressuriseur, aucune des portions de l'enveloppe 19 n'est ainsi engagée à travers le pressuriseur et la cuve et ne fait saillie à l'extérieur du pressuriseur et de la cuve. De même, l'intégralité du corps chauffant 21 est logée à l'intérieur du pressuriseur. Seuls les conducteurs électriques 17 sortent du pressuriseur.

Les composants assurant le chauffage, c'est-à-dire les éléments chauffants 13, sont ainsi indépendants des composants assurant la pénétration électrique dans le pressuriseur, c'est-à-dire les points de connexion et les conducteurs 17.

Chaque élément chauffant 13 est démontable par rapport au conducteur 17 auquel il est raccordé.

Comme visible sur la figure 1 et plus particulièrement sur la figure 2, chaque élément chauffant 13 est disposé dans un plan sensiblement perpendiculaire à l'axe central C. En d'autres termes, chaque élément chauffant 13 est disposé dans un plan sensiblement horizontal.

Ainsi, chaque élément chauffant 13 s'étend entièrement dans la zone inférieure 9 du pressuriseur, et est donc totalement immergé dans le liquide primaire. Un tel agencement permet de configurer très librement les éléments chauffants 13, et de leur donner toute forme adaptée. Il permet notamment de conférer une grande longueur aux éléments chauffants et d'augmenter la surface d'échange thermique avec le liquide, tout en réservant des zones d'implantation pour les autres équipements liés au (ou passant par) le dôme du pressuriseur.

Dans un mode de réalisation particulièrement avantageux, chaque élément chauffant 13 s'étend selon un arc de cercle centré sur l'axe central C. Typiquement, les éléments chauffants 13 sont répartis en deux anneaux, ou en trois anneaux, ou en plus de trois anneaux. Le nombre d'éléments chauffants 13 par anneau est variable. Ainsi, chaque anneau peut comporter deux éléments chauffants 13, ou trois, ou plus de trois.

Dans un mode de réalisation les anneaux sont superposés les uns aux autres à la périphérie du pressuriseur. Cette disposition réserve un large espace au centre du pressuriseur par exemple pour implanter des réservations pour les mécanismes de contrôle.

Dans un autre mode de réalisation les éléments chauffants 13 disposés en plusieurs anneaux centrés sur l'axe central C, disposés de manière concentrique, selon plusieurs cercles de rayons croissants sur la totalité de la surface et en un seul niveau afin de favoriser les échanges thermiques.

Selon une autre variante, les éléments chauffants 13 ne sont pas agencés selon des arcs de cercles mais selon toute autre forme adaptée aux échanges thermiques en fonction du dessin particulier du réacteur et des dispositifs à aménager dans le pressuriseur.

Dans un mode de réalisation particulièrement avantageux, les éléments chauffants 13 eux-mêmes ont une forme en arc de cercle. On entend par là que le tube 19 est configuré en arc de cercle.
En variante, l'élément chauffant 13 est formé par une pluralité de tronçons rectilignes placés dans le prolongement les uns des autres, ces tronçons bout à bout formant approximativement un arc de cercle. Dans cet exemple de réalisation, des tronçons rectilignes successifs forment polygone régulier.

La cuve 3 comprend une partie inférieure fixe 23 et une partie supérieure 25 fixée de manière démontable sur la partie inférieure 23. La partie inférieure 23 comporte typiquement une virole cylindrique 27 coaxiale à l'axe central C, fermée à une extrémité inférieure par un fond bombé inférieur 29. La virole 27 se termine vers le haut par une bride 31. Typiquement, le coeur 7 et une partie des internes du réacteur nucléaire sont logés à l'intérieur de la partie inférieure 23.

Par ailleurs, la partie supérieure 25 comporte un dôme 33. Le réacteur nucléaire 1 comporte une plaque 35 dite d'isolation thermique disposée dans la cuve et fixée au dôme 33. Le dôme 33 et la plaque d'isolation thermique 35 délimitent entre eux le pressuriseur 5.

La plaque d'isolation thermique 35 est fixée de manière démontable au dôme 33. Elle est sensiblement perpendiculaire à l'axe central C.

Au niveau de la plaque d'isolation thermique 35, la partie supérieure 25 de la cuve 3 présente une section interne libre de forme déterminée, la plaque d'isolation thermique 35 présentant une forme conjuguée de ladite section interne libre. Ainsi, la plaque d'isolation thermique 35 s'étend sur toute la section libre. Elle est prévue pour isoler physiquement et thermiquement le volume supérieur de la cuve, qui forme le pressuriseur 5, du volume inférieur de la cuve dans lequel sont logés le coeur, le ou les générateur(s) de vapeur, et un certain nombre de mécanismes tels que les grappes de contrôle de la réactivité du coeur et les actionneurs prévus pour déplacer ces grappes.

La plaque d'isolation thermique 35 est percée par des ouvertures permettant au liquide primaire de circuler entre le volume supérieur de la cuve et le volume inférieur de la cuve. Ces ouvertures ne sont pas représentées sur les figures.

La partie supérieure 25 de la cuve se termine vers le bas par une contre-bride 37, prévue pour être fixée de manière étanche et démontable à la bride 31. Dans l'exemple de réalisation illustré sur les figures 1 et 2, la contre-bride 37 est directement solidaire du dôme 33. En variante, la partie supérieure de la cuve comporte une virole cylindrique, prolongeant le dôme 33 vers le bas, la contre-bride 37 étant solidaire de la virole.

Les éléments chauffants 13 sont fixés à la plaque d'isolation thermique 35. Typiquement, ils sont fixés à une face supérieure de la plaque d'isolation thermique 35, tournée vers le pressuriseur 5.

A cette fin, le réacteur nucléaire 1 comporte un châssis 39, fixé à la plaque d'isolation thermique 35, les éléments chauffants 13 étant fixés eux-mêmes au châssis.

Par ailleurs, le réacteur nucléaire 1 comporte une pluralité de pénétrations électriques 51 définissant des passages étanches à travers le pressuriseur et à travers la cuve 3. Ces pénétrations électriques 51 sont des pénétrations électriques prévues pour le passage étanche des conducteurs électriques 17 à travers le pressuriseur et à travers la cuve. Il est important de souligner que seuls les conducteurs électriques 17 sortent du pressuriseur par les pénétrations électriques 51. Comme indiqué plus haut, on entend par là que les points de connexion électrique entre les éléments chauffants et les conducteurs électriques 17 sont placés à l'intérieur du pressuriseur et donc que les éléments chauffants 13 ne sortent pas du pressuriseur et donc de la cuve par les pénétrations électriques 51.

Dans le mode de réalisation des figures, chaque élément chauffant 13 n'est pas extractible du pressuriseur par la pénétration électrique 51 du conducteur électrique 17 auquel il est raccordé.

Le réacteur nucléaire comporte encore des traversées de fluide 53, par exemple pour les soupapes de sécurité.

Les pénétrations électriques 51 sont de tout type adapté. Par exemple, elles sont du type décrit dans WO 2013/158697.

Comme visible sur la figure 2, les pénétrations électriques 51 traversent une partie du dôme 33 délimitant la zone supérieure 11 du pressuriseur.

Ainsi, en cas de fuite au niveau des pénétrations électriques 51, c'est la phase vapeur qui s'échappe à travers les pénétrations électriques 51, et non le liquide primaire ce qui est connu pour être plus favorable dans les analyses de sûreté par rapport à la situation où la fuite se produit dans une traversée débouchant dans une zone inférieure 9 baignée par le liquide primaire.

Typiquement, le réacteur nucléaire comporte une pénétration électrique 51 pour chaque élément chauffant 13.

Chaque pénétration électrique 51 comporte un tube 57 d'orientation sensiblement parallèle à l'axe C. Ce tube présente une extrémité inférieure 59 fixée de manière amovible au châssis 39. Cette extrémité inférieure 59 est obturée par un obturateur non représenté, traversé de manière étanche par les conducteurs 17 qui viennent se raccorder à l'élément chauffant 13 desservi pour la pénétration électrique.

Dans les réalisations utilisant des éléments chauffants traversant la cuve, le nombre d'éléments chauffants (généralement plusieurs dizaines) est défini par les contraintes technologiques applicables à ces éléments. Au contraire, dans le cadre de l'invention, le nombre d'éléments chauffants et la puissance de chaque élément chauffant sont choisi(s) uniquement pour répondre aux exigences fonctionnelles et de sûreté, notamment :
- les différents types de chauffage à envisager (chauffage du liquide primaire au démarrage du réacteur, chauffage prioritaire, régulation de la pression, etc...) ;
- les transitoires thermodynamiques tolérées en cas d'avarie d'un élément chauffant ;
- les redondances exigées pour des raisons de sûreté, etc...

Ainsi, typiquement, le réacteur nucléaire 1 comprend entre trois et quinze éléments chauffants 13, et de préférence entre six et douze éléments chauffants 13.

Dans l'exemple représenté, le réacteur nucléaire 1 comporte douze éléments chauffants 13, formant chacun un demi-cercle.

La structure d'un élément chauffant 13 est représentée sur la figure 3. Comme indiqué plus haut, cet élément chauffant comporte une enveloppe externe 19 de forme cylindrique, et un corps chauffant 21 placé à l'intérieur de l'enveloppe externe 19. L'enveloppe externe est dans un matériau compatible avec le fluide primaire, typiquement un alliage d'acier inoxydable. Elle est de section circulaire, ou ovale, ou de toute autre section.

Le corps chauffant 21 comporte typiquement un ou plusieurs fils chauffants ayant chacun une âme métallique résistive recouverte par une couche d'isolant électrique.

Du fait que les éléments chauffants 13 ne sont pas agencés dans un orifice de la cuve en vue de permettre leur extraction pour des raisons de maintenance, ces éléments chauffants peuvent être conçus de manière différente des éléments chauffants typiquement utilisés dans les pressuriseurs.

En effet, les éléments chauffants typiquement utilisés dans les pressuriseurs de réacteurs nucléaires doivent respecter un grand nombre de contraintes.

Le diamètre extérieur de l'élément chauffant est limité, de manière à ne pas réaliser dans la cuve des orifices de diamètre important pour l'introduction et l'extraction de ces éléments chauffants. Limiter le diamètre des orifices permet de limiter l'importance des fuites en cas d'accident.

La section de l'âme métallique résistive ne peut pas être diminuée car elle est déterminée par la quantité de courant circulant dans l'élément chauffant. Du fait des différentes contraintes ci-dessus, l'épaisseur de la couche d'isolant électrique est réduite au minimum techniquement possible. Ceci entraîne un taux de défaillance significatif, qui pénalise le fonctionnement du pressuriseur et qui allonge les opérations de maintenance inter cycle.

Au contraire, dans l'invention, du fait que les éléments chauffants n'ont pas à être extraits à travers un orifice de diamètre limité pratiqué dans la cuve, les contraintes de conception pour les éléments chauffants sont beaucoup moins strictes. Ainsi, il est possible d'augmenter le diamètre externe de l'élément chauffant 13, et donc d'augmenter l'épaisseur de la couche d'isolant. Ceci réduit la fréquence et le nombre de défaillances des éléments chauffants 13.

En conséquence, il sera procédé qu'à une inspection et/ou un échange préventif des éléments chauffants pendant les périodes d'arrêt de longue durée du réacteur nucléaire, typiquement à échéance d'une à plusieurs visites décennales en fonction des préconisations du fournisseur. Cette intervention, qui a lieu dans la piscine d'intervention sur les composants actifs, est couplée avec des contrôles réglementaires des internes du pressuriseur, hors du chemin critique des périodes d'arrêts de longue durée.

Dans les réacteurs nucléaires de l'état de la technique, ces opérations de maintenance des éléments chauffants sont effectuées principalement de manière curative à l'occasion des arrêts inter-cycle, c'est-à-dire les arrêts programmés entre autres pour remplacer une partie des assemblages de combustibles nucléaires, et participent à la coactivité sur le chemin critique de ces arrêts.

Par exemple, dans l'invention, l'enveloppe externe 19 présente un diamètre externe supérieur à 50mm La couche d'isolant électrique présente une épaisseur de plusieurs mm.

De manière à améliorer les transferts thermiques entre l'élément chauffant 13 et le liquide primaire, l'élément chauffant porte avantageusement au moins une ailette 69 en saillie sur une surface externe de l'enveloppe 19. Par exemple, l'ailette 69 s'enroule de manière hélicoïdale autour de l'enveloppe externe 19, et est solidaire de cette enveloppe externe 19. En variante, l'élément chauffant comporte une pluralité d'ailettes 69 annulaires, régulièrement espacées les unes des autres. L'ailette hélicoïdale peut également être remplacée par toute sorte d'autre forme externe, favorisant les échanges thermiques entre l'élément chauffant 13 et le liquide primaire.

La ou les ailettes 69 sont formées avec l'enveloppe externe 19, ou sont rapportées sur l'enveloppe externe 19.

Le réacteur nucléaire 1 est agencé de telle sorte que la plaque d'isolation thermique 35 soit démontable du dôme 33, après séparation de la partie inférieure fixe 23 et de la partie supérieure 25 de la cuve du réacteur. Cette opération est typiquement effectuée dans la piscine dédiée aux interventions sur les composants.

Typiquement, la plaque d'isolation thermique 35 et le dôme 33 sont fixés l'un à l'autre par des organes de fixation amovibles, tels que des vis, qui sont accessibles une fois la partie supérieure de la cuve démontée.

Le châssis 39 et les éléments chauffants 13 viennent avec la plaque d'isolation thermique 35. Les traversées 51 viennent avec le dôme 33. Les pénétrations électriques 51 sont désolidarisées du châssis 39 avant séparation entre la plaque d'isolation thermique 35 et le dôme 33.

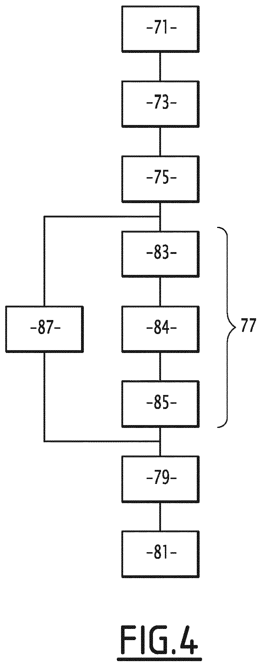

Le procédé d'exploitation du réacteur nucléaire décrit ci-dessus va maintenant être détaillé, en référence à la figure 4 pour ce qui concerne les périodes d'arrêt, particulièrement les arrêts de longue durée. Ce procédé comporte au moins les étapes suivantes :
- produire de l'énergie avec le réacteur nucléaire (étape 71) ;
- arrêter la production d'énergie (étape 73) ;
- ouvrir la cuve 3 du réacteur (étape 75) ;
- effectuer des opérations de maintenance sur des éléments du pressuriseur dont au moins un des éléments chauffants 13 (étape 77),
- effectuer en parallèle des opérations de maintenance programmées sur d'autres composants du réacteur, en particulier des opérations de remplacement d'assemblages de combustible (étape 87).
- fermer la cuve 3 du réacteur (79) ;
- produire de nouveau de l'énergie avec le réacteur nucléaire (étape 81).

L'étape d'ouverture de la cuve du réacteur est réalisée en désolidarisant la partie supérieure 25 de la cuve 3 de la partie inférieure fixe 23, la partie supérieure 25 étant transférée dans une piscine dédiée aux interventions sur composants.

L'opération de maintenance sur les éléments chauffants est couplée à d'autres opérations sur le dôme du pressuriseur (typiquement d'inspection réglementaire) nécessitant ce démontage. Elle est donc typiquement réalisée dans la piscine d'intervention sur les composants, et non sur le réacteur lui-même comme ceci est le cas dans les conceptions usuelles. Cette disposition permet donc de limiter les interactions entre lesdites opérations de maintenance et celles réalisées dans le cadre de l'étape 87, qui se déroule sur le réacteur.

L'étape 77 comporte une sous-étape 83 dans laquelle les traversées électriques 51 sont désolidarisées puis la plaque d'isolation thermique 35 est séparée du dôme 33.

Après retrait des organes de fixation, la plaque d'isolation thermique 35, portant le châssis 39 et les éléments chauffants 13, et le dôme 33, portant les traversées 51, sont écartés l'un de l'autre, de manière à permettre un accès aux éléments chauffants 13.

L'étape de maintenance 77 comprend une sous-étape 84 au cours de laquelle les éléments chauffants 13 sont inspectés, et/ou remplacés de manière préventive si nécessaire.

L'étape 77 comporte encore une sous-étape 85, au cours de laquelle la plaque d'isolation thermique 35 est remontée sur le dôme 33, puis les traversées électriques 51 sont reconnectées aux éléments chauffants.

L'augmentation de la fiabilité des éléments chauffants permet d'espacer les périodes de maintenance de ces éléments chauffants. Typiquement, la maintenance des éléments chauffants est prévue de manière préventive pendant les visites décennales, et non de manière curative lors des inter-cycles, c'est-à-dire à chaque arrêt du réacteur nucléaire pour remplacement d'une partie des assemblages de combustibles.

Il est par ailleurs important de souligner que la réduction du nombre d'éléments chauffants permet de réduire le nombre de traversées de la cuve. Elle permet également de simplifier les raccords électriques.

## Revendications

1. Réacteur nucléaire à pressuriseur intégré, le réacteur nucléaire (1) comprenant :
- une cuve (3) ayant un axe central (C) ;
un pressuriseur (15) logé dans la cuve (3), le pressuriseur (15) ayant une zone inférieure (9) remplie par un liquide primaire et une zone supérieure (11) remplie par une vapeur ;
- une pluralité d'assemblages de combustible nucléaire, formant un coeur (7) disposé dans la cuve (3) ;
- une pluralité d'éléments chauffants (13) prévus pour chauffer le liquide primaire remplissant la zone inférieure (9) du pressuriseur;
- au moins une source de courant (15) ;
- des conducteurs électriques (17) raccordant chaque élément chauffant (13) à la source de courant électrique (15) ;
- une pluralité de pénétrations électriques (51), définissant des passages étanches à travers la cuve (3)
**caractérisé en ce que** les éléments chauffants (13) sont entièrement logés dans le pressuriseur (5), chaque élément chauffant (13) étant raccordé à un des conducteurs (17) par l'intermédiaire d'un point de connexion électrique placé à l'intérieur du pressuriseur, et **en ce que** seuls les conducteurs électriques (17) sortent de la cuve (3) par les pénétrations électriques (51).

2. Réacteur selon la revendication 1, **caractérisé en ce que** les éléments chauffants (13) s'étendent entièrement dans la zone inférieure (9) du pressuriseur (5).

3. Réacteur selon la revendication 1 ou 2, **caractérisé en ce que** chaque élément chauffant (13) s'étend dans un plan sensiblement perpendiculaire à l'axe central (C).

4. Réacteur selon la revendication 1 ou 2, caractérisé en ce les éléments chauffants (13) s'étendent dans au moins un plan sensiblement perpendiculaire à l'axe central (C).

5. Réacteur selon l'une quelconque des revendications précédentes, **caractérisé en ce que** chaque élément chauffant (13) s'étend selon un arc de cercle centré sur l'axe central (C).

6. Réacteur selon l'une quelconque des revendications précédentes, **caractérisé en ce que** la cuve (3) comprend un dôme (33), le réacteur nucléaire (1) comprend une plaque d'isolation thermique (35) fixée au dôme (33), le dôme (33) et la plaque d'isolation thermique (35) délimitant entre eux le pressuriseur (5), les éléments chauffants (13) étant fixés à la plaque d'isolation thermique (35).

7. Réacteur selon l'une quelconque des revendications précédentes, **caractérisé en ce que** la cuve (3) comprend un dôme (33), les pénétrations électriques (51) traversant une partie du dôme (33) délimitant la zone supérieure (11) du pressuriseur (5).

8. Réacteur selon la revendication 6 ou 7, **caractérisé en ce que** la cuve (3) comprend une partie inférieure (23) fixe et une partie supérieure (25) fixée de manière démontable à la partie inférieure (23), la partie supérieure (25) comprenant au moins le dôme (23).

9. Réacteur selon l'une quelconque des revendications précédentes, **caractérisé en ce que** le réacteur nucléaire (1) comprend entre 3 et 15 éléments chauffants (13).

10. Réacteur selon l'une quelconque des revendications précédentes, **caractérisé en ce que** chaque élément chauffant (13) comporte une enveloppe externe (19), un corps chauffant (21) logé dans l'enveloppe externe (19), et au moins une ailette (69) en saillie sur une surface externe de l'enveloppe externe (19).

11. Réacteur selon l'une quelconque des revendications précédentes, **caractérisé en ce que** les éléments chauffants (13) ne sont pas agencés dans un orifice de la cuve (3).

12. Réacteur selon l'une quelconque des revendications précédentes, **caractérisé en ce que** chaque élément chauffant (13) comporte une enveloppe externe (19), un corps chauffant (21) logé dans l'enveloppe externe (19), l'enveloppe externe (19) étant dans son intégralité située à l'intérieure du pressuriseur.

13. Procédé d'exploitation d'un réacteur selon l'une quelconque des revendications précédentes, le procédé comprenant les étapes suivantes :
- produire de l'énergie avec le réacteur nucléaire (1) ;
- arrêter la production d'énergie ;
- ouvrir la cuve (3) du réacteur (1) ;
- effectuer des opérations de maintenance sur des éléments du pressuriseur dont au moins un des éléments chauffants (13) ;
- effectuer en parallèle des opérations de maintenance programmées sur d'autres composants du réacteur, en particulier des opérations de remplacement d'assemblages de combustible ;
- fermer la cuve (3) du réacteur et produire de nouveau de l'énergie avec le réacteur nucléaire (1).

## Patentansprüche

1. Kernreaktor mit integriertem Druckhalter, der Kernreaktor (1) aufweisend:
- einen Behälter (3) mit einer Mittelachse (C),
einen Druckhalter (15), welcher in dem Behälter (3) untergebracht ist, wobei der Druckhalter (15) einen unteren Bereich (9), welcher durch eine Primärflüssigkeit gefüllt ist, und einen oberen Bereich (11), welcher durch einen Dampf gefüllt ist, aufweist,
- eine Mehrzahl von Kernbrennelementanordnungen, welche einen in dem Behälter (3) angeordneten Kern (7) bilden,
- eine Mehrzahl von Heizelementen (13), welche zum Heizen der Primärflüssigkeit, welche den unteren Bereich (9) des Druckhalters füllt, vorgesehen sind,
- mindestens eine Stromquelle (15),
- elektrische Leiter (17), welche jedes Heizelement (13) mit der elektrischen Stromquelle (15) verbinden,
- eine Mehrzahl von elektrischen Durchführungen (51), welche abgedichtete Durchgänge durch den Behälter (3) hindurch definieren,
**gekennzeichnet dadurch, dass** die Heizelemente (13) vollständig in dem Druckhalter (5) untergebracht sind, wobei jedes Heizelement (13) mit einem von den Leitern (17) mittels eines elektrischen Verbindungspunkts, welcher im Inneren des Druckhalters angeordnet ist, verbunden ist, und dadurch, dass nur die elektrischen Leiter (17) den Behälter (3) durch die elektrischen Durchführungen (51) verlassen.

2. Reaktor gemäß dem Anspruch 1, **gekennzeichnet dadurch, dass** die Heizelemente (13) sich vollständig in dem unteren Bereich (9) des Druckhalters (5) erstrecken.

3. Reaktor gemäß dem Anspruch 1 oder 2, **gekennzeichnet dadurch, dass** jedes Heizelement (13) sich in einer Ebene, welche im Wesentlichen senkrecht zur Mittelachse (C) ist, erstreckt.

4. Reaktor gemäß dem Anspruch 1 oder 2, **gekennzeichnet dadurch, dass** die Heizelemente (13) sich in mindestens einer Ebene, welche im Wesentlichen senkrecht zur Mittelachse (C) ist, erstrecken.

5. Reaktor gemäß irgendeinem der vorhergehenden Ansprüche, **gekennzeichnet dadurch, dass** jedes Heizelement (13) sich entlang eines Bogens eines Kreises, welcher auf die Mittelachse (C) zentriert ist, erstreckt.

6. Reaktor gemäß irgendeinem der vorhergehenden Ansprüche, **gekennzeichnet dadurch, dass** der Behälter (3) einen Dom (33) aufweist, wobei der Kernreaktor (1) eine Platte zur thermischen Isolation (35), welche an dem Dom (33) befestigt ist, aufweist, wobei der Dom (33) und die Platte zur thermischen Isolation (35) dazwischen den Druckhalter (5) begrenzen, wobei die Heizelemente (13) an der Platte zur thermischen Isolation (35) befestigt sind.

7. Reaktor gemäß irgendeinem der vorhergehenden Ansprüche, **gekennzeichnet dadurch, dass** der Behälter (3) einen Dom (33) aufweist, wobei die elektrischen Durchführungen (51) durch einen Teil des Doms (33), welcher den oberen Bereich (11) des Druckhalters (5) begrenzt, hindurch verlaufen.

8. Reaktor gemäß dem Anspruch 6 oder 7, **gekennzeichnet dadurch, dass** der Behälter (3) einen fixierten unteren Teil (23) und einen oberen Teil (25), welcher an dem unteren Teil (23) abnehmbar befestigt ist, aufweist, wobei der obere Teil (25) mindestens den Dom (23) aufweist.

9. Reaktor gemäß irgendeinem der vorhergehenden Ansprüche, **gekennzeichnet dadurch, dass** der Kernreaktor (1) zwischen 3 und 15 Heizelemente (13) aufweist.

10. Reaktor gemäß irgendeinem der vorhergehenden Ansprüche, **gekennzeichnet dadurch, dass** jedes Heizelement (13) eine äußere Hülle (19), einen in der äußeren Hülle (19) untergebrachten Heiz-Körper (21) und mindestens eine von einer Außenfläche der äußeren Hülle (19) abstehende Rippe (69) aufweist.

11. Reaktor gemäß irgendeinem der vorhergehenden Ansprüche, **gekennzeichnet dadurch, dass** die Heizelemente (13) nicht in einer Öffnung des Behälters (3) angeordnet sind.

12. Reaktor gemäß irgendeinem der vorhergehenden Ansprüche, **gekennzeichnet dadurch, dass** jedes Heizelement (13) aufweist eine äußere Hülle (19), einen in der äußeren Hülle (19) untergebrachten Heiz-Körper (21), wobei die äußere Hülle (19) in ihrer Gesamtheit im Inneren des Druckhalters angeordnet ist.

13. Verfahren zur Nutzung eines Reaktors gemäß irgendeinem der vorhergehenden Ansprüche, wobei das Verfahren die folgenden Schritte aufweist:
- Erzeugen der Energie mittels des Kernreaktors (1),
- Anhalten der Energieerzeugung,
- Öffnen des Behälters (3) des Reaktors (1),
- Vornehmen von Wartungsmaßnahmen an den Elementen des Druckhalters, darunter mindestens eines der Heizelemente (13),
- paralleles Vornehmen von geplanten Wartungsmaßnahmen an anderen Komponenten des Reaktors, insbesondere von Maßnahmen zum Austauschen der Brennelementanordnungen,
- Verschließen des Behälters (3) des Reaktors und erneutes Erzeugen der Energie mittels des Kernreaktors (1).

## Claims

1. An integrated pressurizer nuclear reactor, the nuclear reactor (1) comprising:
- a vessel (3) having a central axis (C);
- a pressurizer (15) housed in the vessel (3), the pressurizer (15) having a lower zone (9) filled with a primary liquid and an upper zone (11) filled with steam;
- a plurality of nuclear fuel assemblies, forming a core (7) arranged in the vessel (3);
- a plurality of heating elements (13) provided to heat the primary liquid filling the lower zone (9) of the pressurizer;
- at least one current source (15);
- electrical conductors (17) connecting each heating element (13) to the electrical current source (15);
- a plurality of electrical penetrations (51), defining sealed passages through the vessel (3),
**characterized in that** the heating elements (13) are completely housed in the pressurizer (5), each heating element (13) being connected to one of the conductors (17) via an electrical connection point placed inside the pressurizer, and **in that** only the electrical conductors (17) leave the vessel (3) through the electrical penetrations (51).

2. The reactor according to claim 1, **characterized in that** the heating elements (13) extend entirely in the lower zone (9) of the pressurizer (5).

3. The reactor according to claim 1 or 2, **characterized in that** each heating element (13) extends in a plane substantially perpendicular to the central axis (C).

4. The reactor according to claim 1 or 2, **characterized in that** the heating elements (13) extend in at least one plane substantially perpendicular to the central axis (C).

5. The reactor according to any one of the preceding claims, **characterized in that** each heating element (13) extends along an arc of circle centered on the central axis (C).

6. The reactor according to any one of the preceding claims, **characterized in that** the vessel (3) comprises a dome (33), the nuclear reactor (1) comprises a thermally insulating plate (35) fastened to the dome (33), the dome (33) and the thermally insulating plate (35) defining the pressurizer (5) between them, the heating elements (13) being fastened to the thermally insulating plate (35).

7. The reactor according to any one of the preceding claims, **characterized in that** the vessel (3) comprises a dome (33), the electrical penetrations (51) traversing part of the dome (33) defining the upper zone (11) of the pressurizer (5).

8. The reactor according to claim 6 or 7, **characterized in that** the vessel (3) comprises a stationary lower part (23) and an upper part (25) releasably fastened to the lower part (23), the upper part (25) comprising at least the dome (23).

9. The reactor according to any one of the preceding claims, **characterized in that** the nuclear reactor (1) comprises between 3 and 15 heating elements (13).

10. The reactor according to any one of the preceding claims, **characterized in that** each heating element (13) comprises an outer enclosure (19), a heating body (21) housed in the outer enclosure (19), and at least one fin (69) protruding on an outer surface of the outer enclosure (19).

11. The reactor according to any one of the preceding claims, **characterized in that** the heating elements (13) are not arranged in an orifice of the vessel (3).

12. The reactor according to any one of the preceding claims, **characterized in that** each heating element (13) comprises an outer enclosure (19), a heating body (21) housed in the outer enclosure (19), the entire outer enclosure (19) being situated inside the pressurizer.

13. An operating method for a reactor according to any one of the preceding claims, the method comprising the following steps:
- producing energy with the nuclear reactor (1);
- stopping the production of energy;
- opening the vessel (3) of the reactor (1);
- performing maintenance operations on elements of the pressurizer, including at least one of the heating elements (13);
- in parallel, performing scheduled maintenance operations on other components of the reactor, in particular fuel assembly replacement operations;
- closing the vessel (3) of the reactor and again producing energy with the nuclear reactor (1).
